# EUROPEAN PATENT SPECIFICATION

(11) **EP 2 271 854 B1**
(45) Date of publication and mention of the grant of the patent: **24.10.2012**
(21) Application number: 09785996.1
(22) Date of filing: 08.07.2009
(51) Int. Cl.: F16D 27/112, F16D 27/14

(54) **DISENGAGEABLE PULLEY ASSEMBLY FOR AN ACCESSORY OF AN INTERNAL COMBUSTION ENGINE**
ABNEHMBARE RIEMENANORDNUNG FÜR EIN ZUBEHÖRTEIL EINES VERBRENNUNGSMOTORS
ENSEMBLE POULIE DEGAGEABLE DESTINE A UN ACCESSOIRE D'UN MOTEUR A COMBUSTION INTERNE

(30) Priority: 09.07.2008 IT TO20080531
(43) Date of publication of application: 12.01.2011
(73) Proprietor: Dayco Europe S.R.L., Chieti (IT)
(72) Inventor: PASTA, Massimo, I-10090 San Bernardo d'Ivrea (IT)
(74) Representative: Mola, Edoardo
(86) International application number: PCT/IB2009/006191
(87) International publication number: WO 2010/004413

(56) References cited:
- WO-A-2006/056494
- DE-A1- 4 440 348
- US-A- 3 391 768
- US-A- 4 150 738
- US-A- 5 396 976

## Description

### TECHNICAL FIELD

The present invention relates to a disengageable pulley for an accessory of an internal combustion engine, for instance for a water pump.

A disengageable pulley for a water pump is used to selectively disconnect the pump itself from an accessory drive of the internal combustion engine for reducing polluting emissions.

### BACKGROUND ART

As is known, non-stoichiometric nitrogen oxides NOx are generated in greater amounts for instance when combustion occurs at relatively low temperatures, in particular when the engine is started from a cold condition.

To reduce the time interval during which the production of NOx is higher, the water pump may be disengaged from the accessory drive so that the coolant does not circulate in the engine and the appropriate temperature is reached as quickly as possible.

The need to reduce the emission of polluting agents is especially felt and some car manufacturers have decided to use a disengageable pulley for the water pump even on board engines at a late design stage or on board engines which are already being produced.

This requires that the disengageable pulley meets size and assembly limitations, which are already determined for the engine at issue.

Such disengageable pulleys are shown eg. in WO 2006/056494 or US 5 396 976.

In particular, the disengageable pulley may have to be assembled in a single block on a control shaft extending from a pump body.

At the same time, the pulley assembly may have to be assembled by means of a tool for a front access, i.e. a tool that approaches the pulley assembly in the direction of the engine.

Furthermore, it is preferable that the pulley assembly has reduced axial size.

### DISCLOSURE OF INVENTION

It is the object of the present invention to meet the above specified requirements.

The object of the present invention is achieved by means of a pulley assembly according to claim 1.

### BRIEF DESCRIPTION OF THE DRAWINGS

For a better understanding of the present invention, it will further be disclosed with reference to the accompanying figures, in particular:
- figure 1 is an axial section of a pulley assembly according to the present invention; and
- figure 2 is a perspective view of some details of the pulley assembly of figure 1.

### BEST MODE FOR CARRYING OUT THE INVENTION

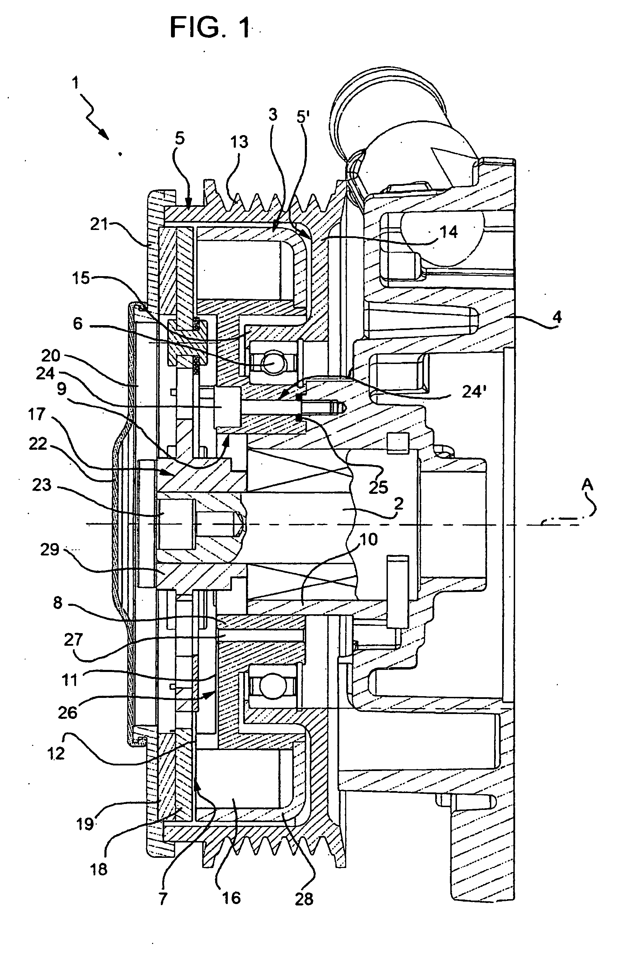

Figure 1 shows as a whole by numeral 1 a disengageable pulley assembly adapted to be connected to a control element 2, for instance a shaft supported by corresponding bearings (shown schematically) for a rotor of a water pump (not shown).

Pulley assembly 1 comprises an annular support element 3 adapted to be fixed to a pump body 4 of the water pump, a pulley 5 radially supported on annular support element 3 by means of a bearing 6 and a friction disengageable device 7 for selectively disengaging pulley 5 from control element 2.

Annular support element 3 comprises a cylindrical body 8 defining a hole 9 within which are assembled a tubular projection 10 of pump body 4, a plate 11 radially extending from cylindrical body 8 and a crown 12 surrounding plate 11.

Pulley 5 has a crown shape having a C-shaped cross section and comprises a working wall 13 adapted to cooperate by friction with a poly-V belt, a plate 14 radially extending from working wall 13 towards cylindrical body 8 and a cylindrical wall 15 concentrical to working wall 13. Preferably pulley 5 is integral.

Electromagnetic disengageable friction device 7 comprises a winding 16 which forms an electromagnet and is supported by crown 12, a resilient support 17 rigidly connected to control element 2, an armature 18 connected to resilient support 17 and a friction ring 19 fixed with respect to armature 18.

Winding 16 and resilient support 17 are housed in a cavity 20 delimited by pulley 5 and annular support element 3. Cavity 20 is closed on the opposite axial part of plate 11 with respect to resilient support 17 by means of a circular crown 21 fixed to the periphery of working wall 13 and a lid 22 which connects, preferably in a snap-fit manner, to close the opening defined by circular crown 21.

Preferably, resilient support 17 is connected to control element 2 by means of a shape coupling and is locked in an axial direction by means of a threaded element 23 which screws on control element 2 and closes plays to define the axial position of resilient support 17.

In an embodiment of the present invention, annular support element 3 is fixed to pump body 4 by means of screws 24 which must be accessible in a front direction, i.e. through circular crown 21, pulley 5 and resilient support 17. Furthermore, to allow a faster assembly, screws 24 are assembled in corresponding seats 24' of cylindrical body 8 and are constrained therein by means of a respective elastic ring 25.

Annular support element 3 further defines a radial recess 26 and a single through-hole 27 angularly interposed between two seats 24' adjacent to allow a feeding thread of winding 16 to directly face pump body 4 and connect to the battery of the vehicle.

According to the present invention, pulley 5 is configured so that electromagnet 16 is at least partially housed in a defined annular cavity 5' of the C-shaped cross section of pulley 5. Preferably, both winding 16 and crown 12 have a maximum radial dimension lower than the minimum radial dimension of working wall 13; and a minimum radial dimension greater than the maximum radial dimension of cylindrical wall 15. Thereby, the axial position of bearing 6, which is assembled between cylindrical body 8 and cylindrical wall 15 and is partially surrounded by winding 16, is advanced towards resilient support 17 and is near the plane in which the resultant of the force applied by the belt on pulley 5 is applied.

Along the axial direction, bearing 6 faces plate 11 on one side and pump body 4 on the other whereas winding 16 faces armature 18 on one side and plate 14 on the other side, in the latter case a protection element 28 rigidly connected to annular support element 3 being interposed. Protection element 28 closes winding 16 towards working wall 13 and towards plate 14 and crown 12 closes the winding towards axis A. Thereby winding 16 is open only towards armature 18 and the axial distance between the two elements in an uncharged condition defines the gap.

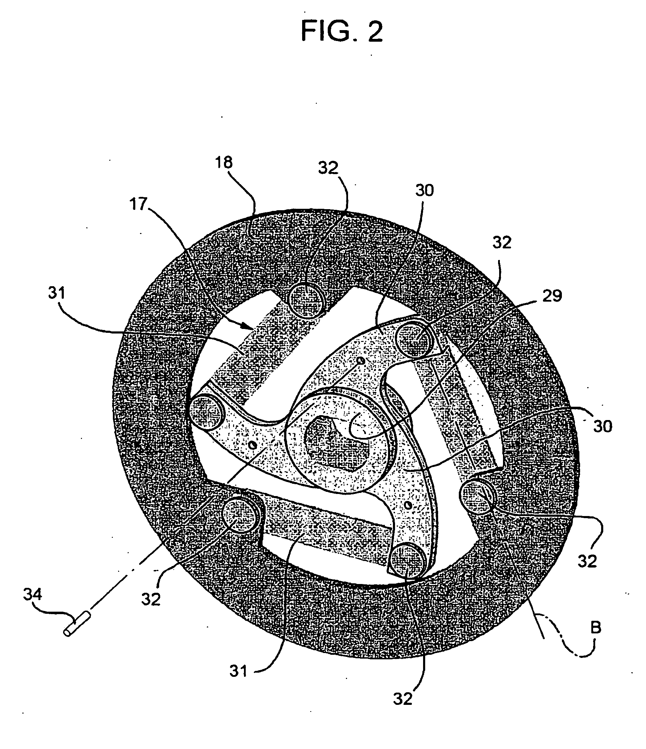

Figure 2 shows resilient support 17 in greater detail.

Resilient support 17 comprises a hub 29 connected by shape coupling to control element 2, a plurality of spokes 30 radially extending from hub 29 and a plurality of leaf springs 31 for connecting corresponding spoke 30 to armature 18. Leaf springs 31 are made by shearing from a flat plate and are flat in an undeformed condition.

In particular, the constraint points between each spoke 30 and corresponding leaf spring 31 and that between each leaf spring 31 and armature 18 are such that leaf springs 31 are arranged in a tangential direction and are loaded, when pulley 5 powers control element 2, by a resultant having a component along axis B of each spring 31 greater with respect to that along a direction transversal with respect to this axis.

According to a preferred embodiment of the present invention, spokes 30 have a curvilinear shape so as to define a free passage area for a tool configured to screw screws 24. Preferably, the passage area allows the tool to access screws 24 along a rectilinear trajectory.

Furthermore, preferably, each leaf spring 31 is connected to corresponding spoke 30 and to armature 18 by means of respective rivets 32.

Pulley assembly 1 is assembled from subunits defined as follows:
- pulley 5 and bearing 6;
- annular support element 3, screws 24, elastic rings 25, winding 16 and protection element 28;
- resilient support 17, armature 18, friction ring 19.

The assembly procedure provides that the above cited subunits are assembled together and closed by means of circular crown 21 to form a unit ready to be assembled on pump body 4 and in which screws 24 are maintained in a correct position to be screwed in corresponding holes of pump body 4 by means of elastic rings 25.

In order to maintain the preassembled subunit comprising resilient support 17, armature 18 and friction ring 19 in position when the pulley assembly is not assembled yet on pump body 4, spokes 31 define respective holes 33 each of which is coaxial to a corresponding hole (not shown) defined by annular element 3. Pins 34 (only one of which is shown) engaging holes 33 and annular element 4 are also provided. The pins are disassembled when pulley assembly 1 is assembled on pump body 4.

During assembly on pump body 4, hub 29 is coupled with control element 2 and is taken in abutment against an appropriate surface of control element 2.

Subsequently, the tool enters through circular crown 21, pulley 5 and resilient support 17 to screw screws 24 and thereby secure the axial position of annular element 3, of pulley 5 and of circular crown 21. This axial position is such that circular crown 21 pushes on friction element 19 and subsequently preloads leaf springs 31 to ensure that pulley 5 transmits power to control element 2 even in case of electrical fault and subsequent inactivation of winding 16.

Subsequently, threaded element 23 is screwed on control element 2 to lock the axial position of hub 29.

Finally cavity 20 is sealed by means of lid 22.

The advantages of pulley assembly 1 according to the present invention are the following.

Pulley 5 has a C-shaped cross section open on the side opposite to pump body 4 so as to make screws 24 accessible on the front.

For the same purpose, leaf springs 31 are tangential and connected to spokes 30.

Annular support element 3 is connected both to pulley 5 and to winding 16 so that the pulley assembly is a single unit ready to be connected to control element 2 and fixed to pump body 2. Once screws 24 and threaded element 23 are fixed, no other connection is required.

Lid 22 closes cavity 20 so as to protect friction disengageable device 7.

The axial dimensions are compact in virtue of the use of leaf springs 31 and due to the fact that bearing 6 is at least partially surrounded by winding 16.

Pins 34 maintain resilient support 17 fixed before pulley assembly 1 is mounted on pump body 4 and avoids damaging the support.

Finally it is clear that modifications and variants may be made to the pulley assembly disclosed and shown herein without departing from the scope of protection defined by the appended claims.

In particular, pulley assembly 1 may also be provided without screws 24. In this case, respective seats 24' are in any case accessible both through pulley 5 and through resilient support 17.

## Claims

1. A pulley assembly defining an axis (A) and including a support (17) resilient in an axial direction adapted to be connected to a control shaft of an accessory, an annular element (3) arranged between said support (17) and a fixed element, preferably said accessory, and having connecting means (24) adapted to be connected to said fixed element, a pulley (5) rotatable about said axis (A) with respect to said annular element (31), a winding (16) carried by said annular element (3) and housed in a cavity (20) delimited by said pulley (5) and said annular element (3), an armature (18) supported by said support (17) and operable by means of said winding (16), a friction element (19) fixed with respect to said armature (18) and indirectly cooperating also with said pulley (5), wherein said cavity (20) is closed on the opposite axial part of said annular element (3) with respect to said support (17) by means of a ring (21) fixed to the periphery of said pulle (5) and said support (17) is configured to press said friction element (19) against said ring (21) **characterized in that** said support (17) is further configured so that said connecting means (24) may be accessed at least through said pulley (5) by a tightening tool which advances towards said annular element (3) through said pulley (5).

2. A pulley assembly according to claim 1, **characterized in that** said support (17) is configured so that said connecting means (24) may be accessed through said support (17) by said tightening tool.

3. A pulley assembly according to any one of the preceding claims, **characterized in that** at least said pulley (5) is configured to allow the access of said tool along a linear trajectory.

4. A pulley assembly according to claim 1 **characterized in that** it includes a lid (22) connected to said pulley (5) to close said support (17), said keeper (18), said friction element (19) and said winding (16) inside the closed chamber (20) which is defined at least by said annular element (3), said pulley (5), said ring (21) and said lid (22).

5. A pulley assembly according to any one of the preceding claims, **characterized in that** said pulley (5) is radially supported by said annular element (3) and **in that** said annular element (3) defines a shaped recess (26, 27) for accommodating a supply wire of said winding (16), said recess (26, 27) displaying an access to a radial position lower than that of the minimum radial dimension of said pulley (5).

6. A pulley assembly according to any one of the preceding claims, **characterized in that** said connecting means include at least one screw (24) and an elastic ring (25) to maintain said screw (24) in place into a corresponding seat (24') defined by said annular element (3) when said pulley assembly (1) has not yet been connected to said fixed element.

7. A pulley assembly according to any one of the preceding claims, **characterized in that** at least said support (17) defines seats (33) adapted to cooperate with dismountable supporting means (34) configured to rigidly connect said support (17) to said annular element (3).

8. A pulley assembly according to any one of the preceding claims, **characterized in that** said support (17) includes, in a pre-assembled assembly, a hub (29) adapted to be connected to a shaft (2) of said accessory, a plurality of spokes (30) radially exiting from said hub (29) and a plurality of leaf springs (31) for connecting a corresponding spoke (30) to said armature (18).

9. A pulley assembly according to any one of the preceding claims, **characterized in that** said pulley (5) is radially supported on said annular element (3).

10. A pulley assembly according to claim 9, **characterized in that** said pulley (5) has a C-shaped cross section defining an annular cavity and is supported by a bearing (6) at least partially surrounded by said winding (16), said winding being at least partially housed in said annular cavity.

## Patentansprüche

1. Riemenscheibenanordnung, die eine Achse (A) definiert und eine in eine axiale Richtung elastische Lagerung (17) umfasst, die ausgelegt ist, um mit einer Steuerwelle eines Zubehörteils verbunden zu werden, ein ringförmiges Element (3), das zwischen der Lagerung (17) und einem fixierten Element angeordnet ist, vorzugsweise das Zubehörteil, und das ein Verbindungsmittel (24) umfasse das ausgelegt ist, um mit dem fixierten Element verbunden zu werden, eine Riemenscheibe (5), die um die Achse (A) bezüglich des ringförmiges Elementes (3) drehbar vorgesehen ist, eine Wicklung (16), die von dem ringförmigen Element (6) getragen wird, und in einer Kavität (20) aufgenommen ist, die über die Scheibe (5) und das ringförmige Element (3) begrenzt wird, ein Rotor (18), der über die Lagerung (17) gelagert ist und mittels der Wicklung (16) betreibbar ist, ein Reibungselement (19), das bezüglich des Rotors (18) fixiert ist und indirekt auch mit der Riemenscheibe (5) zusammenwirkt, wobei die Kavität (20) an dem gegenüberliegenden axialen Element des ringförmigen Elements (3) bezüglich der Lagerung (17) mittels eines Rings (21) verschlossen ist, der an dem Umfang der Riemenscheibe (5) fixiert ist wobei die Lagerung (17) dazu ausgelegt ist, das Reibungselement (19) gegen den Ring (21) zu pressen, **dadurch gekennzeichnet, dass** die Lagerung (17) weiter derart ausgelegt ist, dass wenigstens durch die Scheibe (3) über ein Befestigungswerkzeug auf das Verbindungsmittel (24) zugegriffen werden kann, das sich zu dem ringförmigen Element (3) durch die Riemenscheibe (5) annähert.

2. Riemenscheibenanordnung gemäß Anspruch 1, **dadurch gekennzeichnet**n dass die Lagerung (17) derart ausgelegt ist, dass auf das Befestigüngsmittel (24) durch die Lagerung (17) über das Befestigungswerkzeug zugegriffen werden kann.

3. Riemenscheibenanordnung gemäß einem der vorstehenden Ansprüche, **dadurch gekennzeichnet, dass** wenigstens die Riemenscheibe (5) ausgelegt ist, um den Zugang des Werkzeugs entlang einer linearen Bewegungsbahn zu ermöglichen.

4. Riemenscheibenanordnung gemäß Anspruch 1, **dadurch gekennzeichnet, dass** sie einen Deckel (22) umfasst, der mit der Riemenscheibe (5) verbunden ist, um die Lagerung (17), den Halter (18), das Reibungselement (19) und die Wicklung (16) innerhalb der geschlossenen Kammer (20) zu erschließen, die wenigstens über das ringförmige Element (3), die Riemenscheibe, den Ring (21) und den Deckel (22) definiert ist.

5. Riemenscheibenanordnung gemäß einem der vorstehenden Ansprüche, **dadurch gekennzeichnet, dass** die Riemenscheibe über das ringförmige Element (3) radial gelagert ist und dadurch, dass das ringförmige Element (3) eine geformte Ausnehmung (26, 27) zum Aufnehmen eines Zuführdrahtes der Wicklung (16) definiert, wobei die Ausnehmung (26, 27) einen Zugang zu einer radialen Position, die niedriger ist als die von der minimalen radialen Abmessung der Riemenscheibe (5), anzeigt.

6. Riemenscheibenanordnung gemäß einem der vorstehende Ansprüche, **dadurch gekennzeichnet, dass** das Verbindungsmittel wenigstens eine Schraube (24) und einen elastischen Ring (25) umfasst, um die Schraube (24) an einer Stelle in einem korrespondierenden Sitz (24') zu halten, der über das ringförmige Element (3) definiert ist, wenn die Riemenscheibenanordnung (1) noch nicht an dem fixierten Element befestigt ist.

7. Riemenscheibenanordnung gemäß einem der vorstehenden Ansprüche, **dadurch gekennzeichnet, dass** wenigstens die Lagerung (17) Sitze (33) definiert, die ausgelegt sind, um mit einem abnehmbaren Lagerungsmittel (34) zusammenzuwirken, das ausgelegt ist, um die Lagerung (17) mit dem ringförmigen Element (3) starr zu verbinden.

8. Riemenanordnung gemäß einem der vorstehenden Ansprüche, **dadurch gekennzeichnet, dass** die Lagerung (17) umfasst, in einer zuvor zusammengesetzten Anordnung, einen Radkörper (29), der ausgelegt ist, um mit einer Welle (2) von dem Zubehörteil befestigt zu werden, mehrere Speichen (30), die radial von dem Radkörper (29) heraustreten und mehrere Blattfedern (31) zum Verbinden einer korrespondierenden Speiche (30) mit dem Rotor (18).

9. Riemenscheibenanordnung gemäß einem der vorstehenden Ansprüche, **dadurch gekennzeichnet, dass** die Riemenscheibe (5) radial an dem ringförmigen Element (3) gelagert ist.

10. Riemenscheibenanordnung gemäß Anspruch 9, **dadurch gekennzeichnet, dass** die Scheibe (5) einen C-formigen Querschnitt umfasst, der eine ringförmige Kavität definiert und über ein Lager (6), das wenigstens teilweise von der Wicklung (16) umgeben ist, gelagert ist, wobei die Wicklung Wenigstens teilweise in der ringförmigen Kavität aufgenommen ist.

## Revendications

1. Dispositif à poulie, définissant un axe (A) et incluant un support (17) doué d'élasticité dans une direction axiale, conçu pour être relié à un arbre de commande d'un équipement auxiliaire, un élément annulaire (3) interposé entre ledit support (17) et un élément stationnaire constitué, de préférence, par ledit équipement auxiliaire, et présentant des moyens de liaison (24) conçus pour être reliés audit élément stationnaire, une poulie (5) pouvant tourner autour dudit axe (A) par rapport audit élément annulaire (3), un enroulement (16) supporté par ledit élément annulaire (3) et logé dans une cavité (20) délimitée par ladite poulie (5) et par ledit élément annulaire (3), un induit (18) en appui sur ledit support (17) et actionnable au moyen dudit enroulement (16), un élément de friction (19) fixe par rapport audit induit (18) et coopérant également avec ladite poulie (5), en mode indirect, ladite cavité (20) étant fermée sur la partie axiale opposée dudit élément annulaire (3) vis-à-vis dudit support (17), au moyen d'une bague (21) assujettie à la périphérie de ladite poulie (5), et ledit support (17) étant configuré pour presser ledit élément de friction (19) contre ladite bague (21), **caractérisé par le fait que** ledit support (17) est configuré, par ailleurs, de façon telle que lesdits moyens de liaison (24) soient accessibles, au moins à travers ladite poulie (5), à un outil de serrage progressant vers ledit élément annulaire (3) en traversant ladite poulie (5).

2. Dispositif à poulie, selon la revendication 1, **caractérisé par le fait que** ledit support (17) est configuré de façon telle que ledit outil de serrage puisse accéder auxdits moyens de liaison (24) à travers ledit support (17).

3. Dispositif à poulie, selon l'une quelconque des revendications précédentes, **caractérisé par le fait qu'**au moins ladite poulie (5) est configurée pour autoriser l'accès dudit outil le long d'une trajectoire rectiligne.

4. Dispositif à poulie, selon la revendication 1, **caractérisé par le fait qu'**il inclut un couvercle (22) relié à ladite poulie (5) en vue d'occulter ledit support (17), ladite armature (18), ledit élément de friction (19) et ledit enroulement (16), à l'intérieur du compartiment fermé (20) qui est défini au moins par ledit élément annulaire (3), par ladite poulie (5), par ladite bague (21) et par ledit couvercle (22).

5. Dispositif à poulie, selon l'une quelconque des revendications précédentes, **caractérisé par le fait que** ladite poulie (5) est supportée radialement par ledit élément annulaire (3) ; et **par le fait que** ledit élément annulaire (3) définit un évidement (26, 27) profilé pour recevoir un fil d'alimentation dudit enroulement (16), ledit évidement (26, 27) offrant accès à un emplacement radial situé plus bas que celui de la dimension radiale minimale de ladite poulie (5).

6. Dispositif à poulie, selon l'une quelconque des revendications précédentes, **caractérisé par le fait que** lesdits moyens de liaison comprennent au moins une vis (24) et une bague élastique (25) conçue pour maintenir ladite vis (24) en place dans un siège correspondant (24'), défini par ledit élément annulaire (3), lorsque ledit dispositif (1) à poulie n'a pas encore été relié audit élément stationnaire.

7. Dispositif à poulie, selon l'une quelconque des revendications précédentes, **caractérisé par le fait qu'**au moins ledit support (17) définit des sièges (33) conçus pour coopérer avec des éléments démontables de support (34), configurés de manière à relier rigidement ledit support (17) audit élément annulaire (3).

8. Dispositif à poulie, selon l'une quelconque des revendications précédentes, **caractérisé par le fait que** ledit support (17) présente, en un agencement préassemblé, un moyeu (29) conçu pour être relié à un arbre (2) dudit équipement auxiliaire, une pluralité de rayons (30) radialement en saillie à partir dudit moyeu (29), et une pluralité de lames de ressort (31) destinées à relier un rayon correspondant (30) audit induit (18).

9. Dispositif à poulie, selon l'une quelconque des revendications précédentes, **caractérisé par le fait que** ladite poulie (5) est radialement en appui sur ledit élément annulaire (3).

10. Dispositif à poulie, selon la revendication 9, **caractérisé par le fait que** ladite poulie (5) présente une section transversale configurée en C définissant une cavité annulaire, et est supportée par un palier (6) au moins partiellement entouré par ledit enroulement (16), ledit enroulement étant logé, au moins en partie, dans ladite cavité annulaire.
